# EUROPEAN PATENT SPECIFICATION

(11) **EP 2 185 423 B1**
(45) Date of publication and mention of the grant of the patent: **27.04.2011**
(21) Application number: 08776211.8
(22) Date of filing: 16.07.2008
(51) Int. Cl.: B65B 39/00, B67C 3/28, F16K 1/12

(54) **FLUID CONTROL ARRANGEMENT**
FLUIDSTEUERANORDNUNG
AGENCEMENT DE COMMANDE DE FLUIDE

(30) Priority: 24.07.2007 GB 0714427
(43) Date of publication of application: 19.05.2010
(73) Proprietor: Krones AG, 93073 Neutraubling (DE)
(72) Inventor: Termansen, Jens, Weldrake, York YO19 6BE (GB)
(74) Representative: Sherrard-Smith, Hugh
(86) International application number: PCT/GB2008/050576
(87) International publication number: WO 2009/013523

(56) References cited:
- EP-A- 1 207 108
- WO-A-01/40098
- WO-A-98/30490
- WO-A-2006/045165

## Description

### Field of the Invention

The present invention relates in general to a fluid control arrangement and to a method of controlling fluid.

### Description of the Background Art

Many industries can benefit from mixing different components into a final packaging, for example by mixing a concentrate with a diluted element to achieve a mixture meeting the specification of the final saleable product.

US 5,992,455 Koller discloses a dual stream filling system having a secondary filling tube, fitted with a valve, positioned partly within a primary filling tube. It is clear that a relatively complicated valve closing mechanism needs to be located inside the secondary filling tube. A problem with this apparatus is that hygiene and operation are relatively complex. Another problem is that the apparatus mixes two components inside a nozzle, specifically the secondary filling tube, thus making it impossible to make accurate mid-flow instant changes to the proportions of fluids dispensed.

US 6,772,806 De Villele discloses an apparatus for filling receptacles with two different components, comprising a single carousel providing an inner and outer orbit for the receptacles. A receptacle is initially transported around one orbit of the carousel and filled or partially filled upon arrival at a first of two filling stations, where a nozzle dispenses a weighed amount of one of two components. After passing through the first filling station the receptacle is displaced into the other orbit. The receptacle is then filled upon arrival at a second filling station, where a nozzle dispenses a weighed amount of the second of the two components. A problem with this system is that, as with the Soehnlen apparatus, machines are not utilised to their full filling capacity. Another problem is that the mechanism for transferring receptacles between inner and outer orbits is complex and suffers from increased chances of receptacle breakages.

In one method shown in US 6,446,680 empty milk containers proceed through two filling carousels arranged in series. The first carousel can deliver skimmed milk to the containers on the carousel and the second carousel can deliver full fat milk. The machines are both large and complex. Further, the machines are not utilised to full capacity when containers designated for whole milk only must remain empty as they pass through the skimmed milk carousel.

WO/2006/091159 discloses a method of filling a toothpaste container with two different coloured paste such that a lasting pattern is formed. Concentric inner and outer ducts dispense the paste from the filling nozzle with the outlet from each duct having a valve. Mixing of the different colours is to be avoided.

GB 2429262 discloses a shut-off valve assembly for controlling exhaust gas flow of an internal combustion engine. A main valve and an auxiliary valve are provided. GB 2308174 discloses a single chemical dispenser with a tapered outlet passage leading to an outlet orifice at the bottom end. A drip piston and a dribble piston are also provided. The outlet orifice cannot be opened without the dribble and drip pistons also allowing flow of the single chemical.

EP 1207108 discloses a nozzle for filling operations with two liquid and/or gas products for filler machines which can be aligned with a mouth of a container to be filled.

It is an object of the present invention to provide a fluid control arrangement that solves at least one of the problems of the prior art.

### Disclosure of the Invention

According to a first aspect of the present invention there is provided a fluid control arrangement as set forth in the appended claims. Further optional features are apparent from the dependent claims and the description hereinafter.

According to a second aspect of the present invention there is provided a method of dispensing fluids as set forth in the appended claims. Further optional features are apparent from the dependent claims and the description hereinafter.

According to one aspect of the present invention a fluid control arrangement includes a first valve having an outlet and a first restrictor in which, in use, relative movement between the restrictor and the outlet is arranged to control the flow of a first fluid through the outlet to the first valve; and a second valve having an outlet and a second restrictor in which, in use, relative movement between the restrictor and the outlet is arranged to control the flow of a second fluid through the outlet of the second valve; at least part of the first valve being arranged within the second valve; the second restrictor comprising part of the first valve the exterior surface of both restrictors tapering downwardly and inwardly in the region of each outlet at least when the outlet that the restrictor controls is open.

The first and second restrictors may be independently movable.

The relative movement of at least one of the restrictors and its associated outlet may be arranged to be linear and the relative movement of the first and second restrictors and their associated outlets may be linear and the movement of the first and second restrictors and their associated outlets may be in the same direction.

Fluid of the first valve may be arranged to flow past one side of the second restrictor with fluid of the second valve being arranged to flow past the other surface of the second restrictor.

The first restrictor and the outlet of the first valve may be arranged to be movable together relative to the outlet of the second valve in a plurality of different relative positions of the first restrictor and the outlet of the first valve.

The second restrictor may also comprise the outlet of the first valve.

At least one of the restrictors may be tapered in the direction of relative movement occurring during the first fluid control.

At least one of the outlets may be tapered in the direction of relative movement.

At least one of the restrictors may be arranged to extend through its associated outlet when controlling that fluid.

At least one of the outlets may be arranged to be closed when fluid of that valve is controlled.

At least one of the valves may have a fluid flow meter.

Control means may be provided arranged to close the outlet of at least one valve when a predetermined amount of fluid has flowed through that valve.

Biasing means may be arranged to urge the outlet and the restrictor of at least one valve in at least one direction of relative movement.

At least one of the valves may include power means arranged to cause relative movement of the restrictor and it associated outlet.

Only one of the first restrictor outlets of the first valve or the second restrictor or outlet of the second valve may not move during relative movement in order to restrict the first or second valves. The outlet of the second valve may extend around the first valve. At least one of the outlets may be circular at its outer periphery when viewed in the direction of relative movement of that valve. At least one of the outlets, when opened, may be circular at its inner periphery when viewed in the direction of relative movement of that valve.

The arrangement may include a third valve having an outlet and a third restrictor, at least part of the first or second valves being arranged within the third valve, the third restrictor being part of the second valve. Any features of the first or second valves may also apply to the second and third valves.

The present invention also includes a container arranged to be supplied with fluid from at least one of the valves. The container may be arranged to be supplied with fluid from both valves. Fluid from one valve may be supplied part of fluid from the other fluid being supplied or fluid from both valves may be able to be provided simultaneously. The fluid may be arranged to be mixed before the fluid hits the bottom of the container or fluid in the container. The container may be arranged to remain stationery relative to both valves when, in use, the container is being filled from either or both valves. The arrangement may include weigh means arranged, in use, to control the amount of fluid being supplied from at least one of the valves.

According to another aspect of the present invention a method of controlling fluid with a first valve and a second valve, in which the first valve has an outlet to the first restrictor and the second valve has an outlet to second restrictor with part of the first valve being arranged in the second valve, the method comprises:
controlling the flow of a first fluid through the outlet of the first valve by causing relative movement between the first restrictor and the outlet of the first valve, and controlling the flow of a second fluid through the outlet of the second valve by causing relative movement of the second restrictor and the outlet of the second valve with relative movement of the second restrictor being caused by moving part of the first valve which comprises the second restrictor and when each valve is caused to be open each restrictor of that valve is caused to present in the region of each outlet an exterior surface that tapers downwardly and inwardly..

The method may comprise causing fluid to flow out of one valve and then stopping that flow and then causing fluid to flow out of the other valve. The method may comprise causing fluid from each valve to enter a common container. The method may comprise maintaining the valves and the container stationery relative each other when filling from either or both valves.

The method may comprise causing fluid to flow from the second valve to flow around the complete periphery of the fluid flow path from the outlet of the first valve.

The method may comprise causing fluid to flow into the container and maintaining the fluid flow rate of at least one of the valves and causing that fluid flow to stop when the desired quantity of fluid has entered the container from the valve.

The method may comprise weighing a container into which fluid is flowing from at least one of the valves and stopping that flow when the desired weight has entered the container. The fluid from at least one valve may comprise any one of a liquid, milk, mixtures, powder or granules.

The method may comprise causing fluid to flow from the second valve to be directed at an angle to the vertical at at least the second valve. The method may comprise causing fluid that has left the second valve to be inclined at an angle to the vertical. The method may comprise increasing the angle to the vertical of fluid flowing from the second valve after the fluid has left the second valve at an angle to the vertical.

The method may comprise constricting fluid leaving one of the valves to flow back through the other valve in order to assist in cleaning the valves. The method may comprise locating a cap over the outlets of each valve such that fluid leaving one of the valves is caused to flow within the cap and back into the other valve.

The present invention includes a method of controlling fluid when using a fluid control arrangement as herein referred to.

### Brief Description of the Drawings

For a better understanding of the present invention, and exemplary embodiments of the same, reference will now be made, by way of example, to the accompanying drawings, wherein:
Figure 1 is a cross-section of a fluid control arrangement in accordance with an exemplary embodiment of the present invention, wherein an inner valve is in an open position and an outer valve is in an open position;
Figure 2 shows the inner valve in a closed position and the outer valve in a closed position;
Figure 3 has the inner valve in a closed position and the outer valve in an open position;
Figure 4 shows the inner valve in an open position and the outer valve in a closed position; and
Figure 5 is a schematic cross-section with both valves in an open position in a cleaning position.

### Detailed Description of the Exemplary Embodiments of the Invention

The exemplary fluid control arrangement permits the controlled flow and possible subsequent mixing of at least two fluids. The arrangement provides an inner valve 10 which controls the flow of a first fluid and an outer valve 12 which controls the flow of a second fluid. The inner valve 10 is located within and serves as a valve plug to the outer valve.

A cylindrical body 14 defines an inner valve chamber 16. The body 14 has a fluid inlet port 18 and an outlet port 20. Each port is in fluid communication with the chamber 16. The body 14 ends in a conically tapered valve seat 22 towards the outlet port 20.

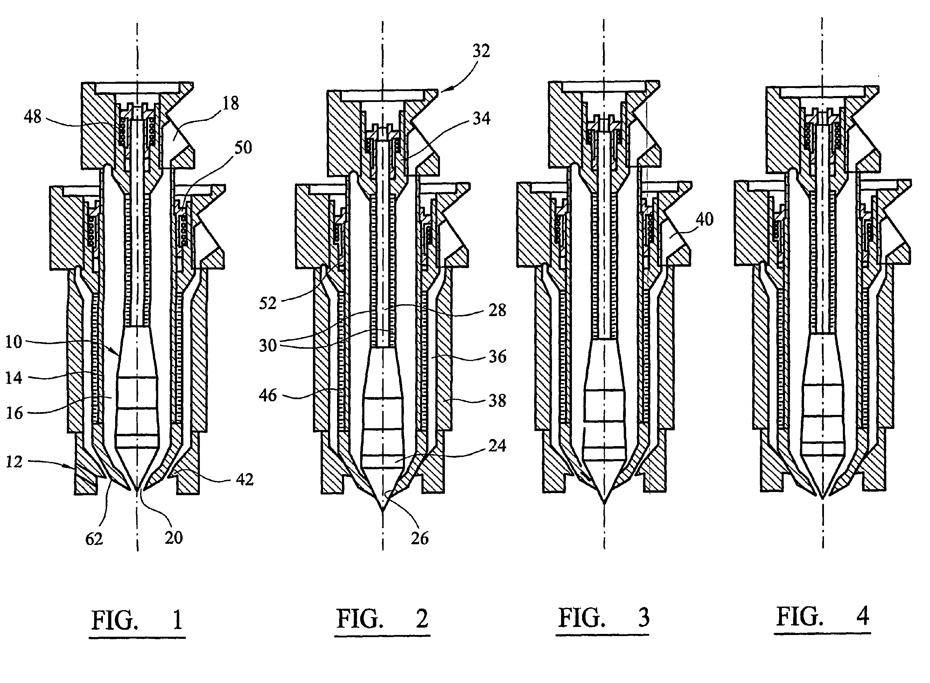

Mounted within the inner valve 10 is a valve plug 24 having a conical taper 26 at its lower end to complement the valve seat 22 so that the plug 24 can sit in the seat 22 to block the outlet port 20 as shown in Figures 2 and 3, or to be clear of that seat in an open position as shown in Figures 1 and 4.

As the plug 24 moves, a valve stem 28 of the plug moves through a bellows 30, connected to a head 32. The bellows ensure that the inner valve chamber 16 remains enclosed and that any fluid present in the chamber is separate from bearings 34 within the head 32 that guide the stem 28.

The outer valve comprises an outer valve chamber 36 the outside of which is defined by a cylindrical body 38.

The body 38 has an inlet port 40 and an outlet port 42. Each port is in fluid communication with the outer valve chamber 36. The body 38 ends in a conically tapered valve seat 44 towards the outlet port 42.

The inner cylindrical body 14 serves as a plug to the outer valve 12.

The body 14 that serves as the outer plug and the inner plug 24 are separately moveable along the longitudinal axis enabling either valve to be selectively opened or closed. The outer valve body 38, in this embodiment is fixed.

The body 14 moves through a bellows 46, which ensures that the bearings 48 and other moving parts between the bodies 14 and 38 are separate from the second fluid.

Pneumatic pressure, for example, or other pressure is applied to the top of the inner valve stem 28 to urge the plug 24 into a closed position, against the action of a compression spring 48. Similarly, pneumatic or other pressure is applied to an upwardly facing surface 50 of the body 14, which surface is located below the head 32. This causes the body 14 to move downwardly against the action of a spring 52 to close the outer valve. Alternatively the spring (or springs) may act to bring the or each valve to the closed position with the applied force opening the valves.

The valves 10 and 12 provide a method of selectively dispensing whole, skimmed or semi-skimmed milk with full fat milk being supplied to the inner valve and skimmed milk to the outer valve. Semi-skimmed milk is formed from a mixture of the full fat milk and skimmed milk.

Both valves 10, 12 are connected to full fat or skimmed milk sources respectively.

Milk is then dispensed from either or both of the valves by opening the valves and allowing milk to flow from the inlet ports 18, 40, through the respective inner/outer outlet ports 20, 42 directly into a milk bottle or carton. The fluids only mix after they leave the valves. For semi skimmed milk both valves are opened, either simultaneously or in sequence.

As shown in Figure 1, the milk leaving the outer valve flows over the exterior surface of the body 14. After the milk leaves the seat 44, the milk continues to flow over and stay within the body 14 as a result of the steep angle to the vertical of that body. In addition, the outer surface of the body 14 includes an arcuate portion 62 extending downwardly towards the outlet of the inner valve. Again the milk clings to the exterior of the body 14 over that arcuate surface and beyond as a result of surface tension such that milk from the second valve may occupy a reduced diameter compared to the diameter of the outlet 42. Indeed, the milk from the second valve may flow downwards, beyond the body 14, over an area that includes at least part of the area defined by milk leaving the first valve outlet 20. In the case where fluid 'a' is less viscous than fluid 'b', then fluid 'a' may be dispensed through the outer valve to enhance the adhesive effect that allows this inwards direction of flow to occur.

The angle of the exterior of the body 14 in the region of the open outlet 42 may be less than 40° to the vertical or more than 10° to the vertical and is preferably 25° to the vertical. The angle of the exterior of the body 14 to the vertical at the location where milk leaves that body may be less than 80° to the vertical or more than 30° to the vertical and is preferably 70° to the vertical.

Similarly, milk leaving the inner valve flows over the outer surface of the downwardly tapering plug 23 and clings to that surface as a result of surface tension. Milk leaving the first valve may have a reduced diameter compared to the diameter of the first outlet.

The angle of the exterior of the plug 24 may be less than 40° to the vertical or may be more than 10 ° and is preferably 20 ° to the vertical.

From Figure 1, where both valves are open, it can be seen that the height of the bottom of the plug 23 and the height of the bottom of the body 24 are the same. Consequently, the different milks mix immediately they leave the arrangement. Thus there may be no need to later mix the different milks and the milks will be thoroughly mixed even before they start to fill a container.

The relative concentrations of whole and skimmed milk in the resulting semi-skimmed milk collected in the auxiliary container may be controlled through monitoring and adjusting the flow rate of each milk component. Flow meters may be employed to measure volumetric flow at each inlet.

Flow rates may be adjusted by either changing the pressure applied upstream from the inlet ports 18,40 or by adjusting the degree to which the valves are open or by closing the valves when the required volume has been dispensed. Flow metering may be finely controlled by a computer so that semi-skimmed milk can be accurately dispensed to meet a desired specification or particular regulatory standards. Flow metering may be adjusted mid-flow to make accurate instant changes to % fat content dispensed. Adjustment of the flow metering allows the same total volume of milk to be dispensed from each valve when separately operated or from both valves when simultaneously operated.

Milk bottle handling is at one station as for any normal one component filling machine. A filling carousel may be employed with the flow metering referred to above. Alternatively, weigh cells may be included below each container to ascertain when a bottle has been sufficiently filled. The weigh cell may optionally be used to sequentially weigh out a desired amount of whole milk followed by a desired amount of skimmed milk.

Fluid control arrangements of the present invention will operate in any filler concept, whether linear, as with a conveyer system, or rotary, as with a carousel system.

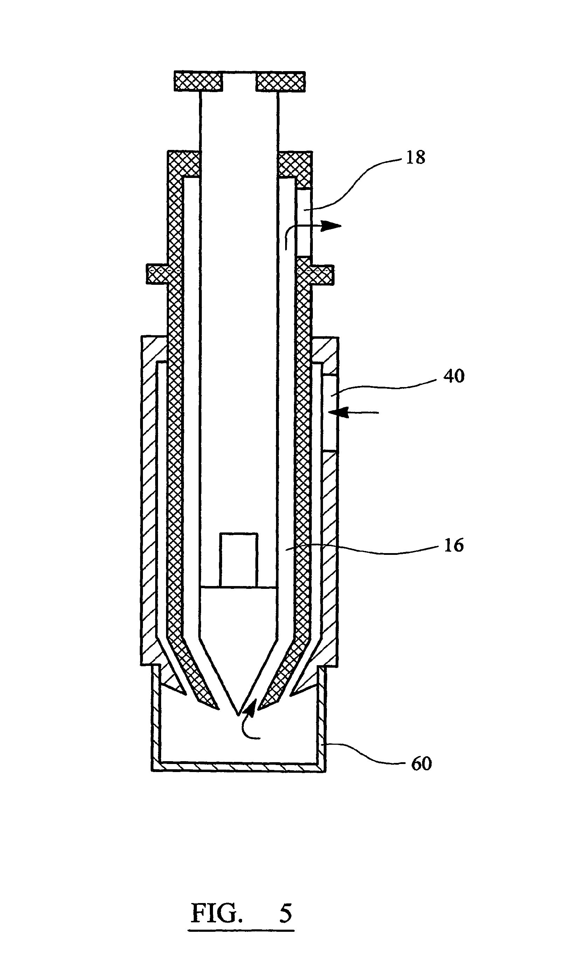

The valve chambers 16, 36 may be easily cleansed by using the arrangement shown in Figure 5. In that Figure, both valves are in the open position and a cap 60 extends around and seals with the exterior of the lower end of the outer valve body 38. During cleansing, water under pressure is supplied through the inlet 40 to the outer valve. This flushes down, out of the outer valve, within the cap 60 and then up the chamber 16 before leaving through the port 18. Liquid leaving the port 18 is monitored, for instance, by measuring the electrical resistance of the liquid. Thus milk leaving the port 18 can be recycled.

The valves may optionally have second inlet ports (not shown) which are themselves fitted with two-way valves to enable the ports to be open and closed. The second inlet ports may then be used to provide a return CIP flow during cleaning.

Fluid control arrangements of the present invention are compatible with a "metric/imperial bottle design" and may dispense milk upon reading the labels.

This principle could be extended to having as many valves located one inside each other as practically possible such as three or more valves each separately selectively operable. For example, the third valve could surround the valves shown with the plug for the third valve comprising the body 38, which body 38 may now be moveable and may then have a tapered lower end to fit into a conically tapered opening of the third valve.

In a further embodiment (not shown) a conduit is provided throughout the length of the stem 28 with an opening at the bottom tip of the stem. A fluid, for example syrup with flavour and/or colouring, may be dispensed through that conduit in a metered dose at any time when a container is located beneath the valves.

A first advantage of the described embodiments is that a less complex and more cost efficient apparatus and method for dispensing fluids is provided, particularly with regard to operations, factory layout, processes and product flows from raw material intake to the despatch of finished products.

A second advantage is that two or more components of a product can be dispensed from separate chambers of the same valve system, either one at a time or all at the same time.

A third advantage of the present invention is that there is provided an apparatus and method for dispensing fluids with significant reductions in footprint, structure, processing, storage, filling and cold-store/warehousing.

A fourth advantage of the present invention is that nozzles and weigh cells are utilised to 100% capacity, since filling with multiple components can occur at one station.

A fifth advantage of the present invention is that cleaning of the fluid control arrangement is simple and does not require any additional cleaning pipes, channels or systems. The present invention furthermore provides a hygienic design with no moving mechanical parts inside the product flow area.

A sixth advantage of the present invention allows production to order, full flexibility, Just In Time order fulfilment, through accurate change of weight or volume, between two containers, of the liquid streams with no loss, inter phase or reduction of speed of filling.

A seventh advantage is that there is less or no waste of milk related to product change, purging or cleaning.

An eighth advantage is that there is a quick change over time as there is no need to drain a tank of skimmed milk, for instance, before replacing with full fat milk.

A ninth advantage is that there is a reduced capital expenditure as only two tanks of milk are required (i.e. not the whole, semi and skimmed tanks - but just the whole and skimmed milk).

A tenth advantage is that the products are able to be mixed immediately they leave the arrangement.

Whilst the present invention has been described in relation to milk, other fluids or mixtures or powders or granules or gases or any combination thereof may be discharged through the two or more valves.

For example water and a concentrate may be mixed as spirits or wine and orange juice and lemonade. Further, a range of flavoured products may be mixed through the different valves, such as by using the same base ingredient, for example. The valves may be used to mix at least one fluid for instance that may be liable to foaming and such dispending may be enhanced as a result of the smooth flow effected by the downwardly tapering surfaces of the plug or body.

If desired, the angles of the tapered surfaces of the plug 10 or body 14 may be altered to ensure that the angle is matched to the surface tension of a product being dispensed for example to optimise the ability of the product to cling to that surface and to assist in the discharge and possibly in the mixing of products as they leave the arrangement.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A fluid control arrangement including:
a first valve (10) having an outlet and a first restrictor (24) in which, in use, relative movement between the restrictor and the outlet (20) is arranged to control the flow of a first fluid downwardly through the outlet of the first valve; and
a second valve (12) having an outlet and a second restrictor (14) in which, in use, relative movement between the restrictor and the outlet is arranged to control the flow of a second, different fluid downwardly through the outlet of the second valve;
at least part of the first valve being arranged within the second valve;
the second restrictor comprising part of the first valve,
**characterised in that**:
the exterior surface of both restrictors taper downwardly and inwardly in the region of each outlet at least when the outlet that the restrictor controls is open.

2. An arrangement as claimed in Claim 1 in which at least one restrictor (24) extends at least to the outlet of the valve that it controls when fluid flows through that valve.

3. An arrangement as claimed in Claim 1 or 2 in which at least one restrictor extends through an outlet of the valve that it controls when fluid flows through that valve.

4. An arrangement as claimed in any preceding claim in which, when two restrictors allow fluid to flow through the valves that they control, the lowermost extent of each restrictor is at substantially the same level.

5. An arrangement as claimed in any preceding claim in which the exterior surface of at least one restrictor tapers (62) downwardly and inwardly.

6. An arrangement as claimed in Claim 5 in which the exterior surface of at least one restrictor increases its inclusive angle to the vertical from the outlet of the valve that it controls downwardly below the second outlet at least when the valve that that restrictor controls allows fluid to flow.

7. An arrangement as claimed in any preceding claim in which the exterior surface of the second valve has an inclusive angle to the vertical of more than 10° or more than 15° or less than 50° or less than 40° or less than 30° and is preferably in the region of 25°.

8. An arrangement as claimed in any preceding claim in which the exterior surface of the second restrictor below the outlet of the second valve is at an inclusive angle to the vertical or less than 50° or less than 40° or more than 10° or more than 15° or in the region of 25°.

9. An arrangement as claimed in any preceding claim in which the first valve has a cavity (16), upstream of the outlet (20) of the first valve, into which first fluid is arranged to be supplied.

10. An arrangement as claimed in Claim 9 in which at least part of the interior surface of the second restrictor defines at least part of the cavity.

11. An arrangement as claimed in Claim 9 or 10 in which the second valve has a cavity (36) upstream of the outlet of the second valve into which a second fluid is arranged to be supplied which cavity is sealed from the cavity of the first valve upstream of outlets of the first and second valves.

12. An arrangement as claimed in Claim 11 in which at least part of the exterior surface of the second restrictor defines at least part of the cavity of the second valve.

13. An arrangement as claimed in any of Claims 8 to 10 comprising a closure member (60) arranged to seal the outlets of the first and second valves such that, when the valves allow fluid to flow, the outlets are in fluid communication with each other whereby, in use, fluid is arranged to flow out of one outlet towards the outlet of the other cavity, and into the other cavity through the outlet of that cavity with the fluid between the cavities being contained by the closure member.

14. A method of controlling fluid with a first valve (10) and a second valve (12), in which the first valve has an outlet (20) and a first restrictor (24) and the second valve has an outlet and a second restrictor with part of the first valve being arranged in the second valve, the method comprising:
controlling the flow of a first fluid downwardly through the outlet (20) of the first valve by causing relative movement between the first restrictor and the outlet of the first valve, and
controlling the flow of a second, different fluid downwardly through the outlet of the second valve by causing relative movement of the second restrictor (46) and the outlet of the second valve with relative movement of the second restrictor being caused by moving part of the first valve which comprises the second restrictor,
**characterised in that**:
when each valve is caused to be open each restrictor of that valve is caused to present in the region of each outlet an exterior surface that tapers downwardly and inwardly.

15. A method as claimed in Claim 14 comprising causing the different fluids to mix as the fluids leave the restrictors.

## Patentansprüche

1. Fluidsteueranordnung, die Folgendes enthält:
ein erstes Ventil (10) mit einem Auslass und einer ersten Drossel (24), wobei im Gebrauch eine Relativbewegung zwischen der Drossel und dem Auslass (20) dazu ausgelegt ist, den Abwärtsstrom eines ersten Fluids durch den Auslass des ersten Ventils zu steuern; und
ein zweites Ventil (12) mit einem Auslass und
einer zweiten Drossel (14), wobei im Gebrauch eine Relativbewegung zwischen der Drossel und dem Auslass dazu ausgelegt ist, den Abwärtsstrom eines zweiten, anderen Fluids durch den Auslass des zweiten Ventils zu steuern;
wobei mindestens ein Teil des ersten Ventils in dem zweiten Ventil angeordnet ist;
wobei die zweite Drossel einen Teil des ersten Ventils umfasst,
**dadurch gekennzeichnet, dass**
sich die Außenfläche beider Drosseln nach unten und nach innen im Bereich jedes Auslasses verjüngt, zumindest wenn der Auslass, den die Drossel steuert, geöffnet ist.

2. Anordnung nach Anspruch 1, wobei sich mindestens eine Drossel (24) mindestens zu dem Auslass des Ventils erstreckt, den sie steuert, wenn Fluid durch das Ventil strömt.

3. Anordnung nach Anspruch 1 oder 2, wobei sich mindestens eine Drossel durch einen Auslass des Ventils erstreckt, den sie steuert, wenn Fluid durch das Ventil strömt.

4. Anordnung nach einem vorhergehenden Anspruch, wobei, wenn beide Drosseln Fluidstrom durch die Ventile, die sie steuern gestatten, die unterste Erstreckung jeder Drossel im Wesentlichen auf gleicher Höhe ist.

5. Anordnung nach einem vorhergehenden Anspruch, wobei sich die Außenfläche mindestens einer Drossel (62) nach unten und nach innen erstreckt.

6. Anordnung nach Anspruch 5, wobei die Außenfläche mindestens einer Drossel ihren Winkel mit der Vertikalen von dem Auslass des Ventils, den sie steuert, nach unten unter dem zweiten Auslass vergrößert, zumindest wenn das Ventil, das die Drossel steuert, Fluidstrom gestattet.

7. Anordnung nach einem vorhergehenden Anspruch, wobei die Außenfläche des zweiten Ventils einen Winkel mit der Vertikalen bildet, der größer als 10° oder größer als 15° oder kleiner als 50° oder kleiner als 40° oder kleiner als 30° ist und vorzugsweise im Bereich von 25° liegt.

8. Anordnung nach einem vorhergehenden Anspruch, wobei die Außenfläche der zweiten Drossel unter dem Auslass des zweiten Ventils in einem Winkel mit der Vertikalen liegt, der kleiner als 50° oder kleiner als 40° oder größer als 10° oder größer als 15° ist oder im Bereich von 25° liegt.

9. Anordnung nach einem vorhergehenden Anspruch, wobei das erste Ventil einen Hohlraum (16) stromaufwärts des Auslasses (20) de s ersten Ventils aufweist, in den erstes Fluid gemäß der Auslegung zugeführt wird.

10. Anordnung nach Anspruch 9, wobei mindestens ein Teil de r Innenfläche de r zweiten Drossel mindestens einen Teil des Hohlraums definiert.

11. Anordnung nach Anspruch 9 oder 10, wobei das zweite Ventil einen Hohlraum (36) stromaufwärts des Auslasses des zweiten Ventils aufweist, in den ein zweites Fluid gemäß der Auslegung zugeführt wird, wobei dieser Hohlraum gegen den Hohlraum des ersten Ventils stromaufwärts der Auslässe des ersten und zweiten Ventils abgedichtet ist.

12. Anordnung nach Anspruch 11, wobei mindestens ein Teil de r Außenfläche de r zweiten Drossel mindestens einen Teil des Hohlraums des zweiten Ventils definiert.

13. Anordnung nach einem der Ansprüche 8 bis 10, die ein Verschlussglied (60) umfasst, das zur Abdichtung der Auslässe des ersten und zweiten Ventils angeordnet ist, so dass, wenn die Ventile Fluidstrom gestatten, die Auslässe miteinander in Strömungsverbindung stehen, wodurch im Gebrauch gemäß der Auslegung Fluid aus einem Auslass zu dem Auslass des anderen Hohlraums und durch den Auslass des Hohlraums in den anderen Hohlraum strömen kann, wobei das Fluid zwischen den Hohlräumen durch das Verschlussglied gehalten wird.

14. Verfahren zum Steuern von Fluid mit einem ersten Ventil (10) und einem zweiten Ventil (12), wobei das erste Ventil einen Auslass (20) und eine erste Drossel (24) aufweist und das zweite Ventil einen Auslass und eine zweite Drossel aufweist, wobei ein Teil des ersten Ventils in dem zweiten Ventil angeordnet ist, wobei da s Verfahren Folgendes umfasst:
Steuern des Stroms eines ersten Fluids nach unten durch den Auslass (20) des ersten Ventils durch Bewirken einer Relativbewegung zwischen der ersten Drossel und dem Auslass des ersten Ventils, und
Steuern des Stroms eines zweiten, anderen Fluids nach unten durch den Auslass des zweiten Ventils durch Bewirken einer Relativbewegung der zweiten Drossel (46) un d des Auslasses de s zweiten Ventils, wobei die Relativbewegung der zweiten Drossel durch Bewegen eines Teils des ersten Ventils, der die zweite Drossel umfasst, bewirkt wird,
**dadurch gekennzeichnet, dass**
wenn das Öffnen jedes Ventils bewirkt wird, bewirkt wird, dass jede Drossel des Ventils in dem Bereich jedes Auslasses eine Außenfläche aufweist, die sich nach unten und nach innen verjüngt.

15. Verfahren nach Anspruch 14, das Bewirken eines Vermischens der verschiedenen Fluide, wenn die Fluide die Drosseln verlassen, umfasst.

## Revendications

1. Dispositif de régulation de fluide comprenant :
une première vanne (10) dotée d'une sortie et d'un premier restricteur (24) où, e n cours d'utilisation, il est fait en sorte qu'un mouvement relatif entre le restricteur et la sortie (20) commande l'écoulement descendant d'un premier fluide à travers la sortie de la première vanne ; et
une deuxième vanne (12) dotée d'une sortie et d' u n deuxième restricteur (14) où, e n cours d'utilisation, il est fait en sorte qu'un mouvement relatif entre le restricteur et la sortie commande l'écoulement descendant d'un deuxième fluide différent à travers la sortie de la deuxième vanne ;
au moins une partie de la première vanne étant disposée à l'intérieur de la deuxième vanne ;
le deuxième restricteur faisant partie de la première vanne,
**caractérisé en ce que** :
la surface extérieure des deux restricteurs est inclinée vers le bas et vers l'intérieur dans la région de chaque sortie au moins lorsque la sortie que commande le restricteur est ouverte.

2. Dispositif selon la revendication 1, dans lequel au moins un restricteur (24) s'étend au moins jusqu'à la sortie de la vanne qu'il commande lorsque du fluide s'écoule à travers la vanne en question.

3. Dispositif selon la revendication 1 ou 2, dans lequel au moins un restricteur s'étend à travers une sortie de la vanne qu'il commande lorsque du fluide s'écoule à travers la vanne en question.

4. Dispositif selon l'une quelconque des revendications précédentes, dans lequel, lorsque deux restricteurs laissent s'écouler du fluide à travers les vannes qu'ils commandent, l'étendue inférieure extrême de chaque restricteur se trouve sensiblement au même niveau.

5. Dispositif selon l'une quelconque des revendications précédentes, dans lequel la surface extérieure d'au moins un restricteur est inclinée (62) vers le bas et vers l'intérieur.

6. Dispositif selon la revendication 5, dans lequel la surface extérieure d'au moins un restricteur augmente son angle intercepté par rapport à la verticale à partir de la sortie de la vanne qu'il commande vers le bas, au-dessous de la deuxième sortie, au moins lorsque la vanne que commande le restricteur en question laisse s'écouler du fluide.

7. Dispositif selon l'une quelconque des revendications précédentes, dans lequel la surface extérieure de la deuxième vanne présente un angle intercepté par rapport à la verticale supérieur à 10°, supérieur à 15°, inférieur à 50°, inférieur à 40° ou inférieur à 30° et se situant de préférence dans la région de 25°.

8. Dispositif selon l'une quelconque des revendications précédentes, dans lequel la surface extérieure du deuxième restricteur au-dessous de la sortie de la deuxième vanne, se situe à un angle intercepté par rapport à la verticale inférieur à 50°, inférieur à 40°, supérieur à 10°, supérieur à 15° ou dans la région de 25°.

9. Dispositif selon l'une quelconque des revendications précédentes dans lequel la première vanne est dotée d'une cavité (16), en amont de la sortie (10) de la première vanne, dans laquelle il est fait en sorte d'amener un premier fluide.

10. Dispositif selon la revendication 9, dans lequel au moins une partie de la surface intérieure du deuxième restricteur définit au moins une partie de la cavité.

11. Dispositif selon la revendication 9 ou 10, dans lequel la deuxième vanne est dotée d'une cavité (36) en amont de la sortie de la deuxième vanne, dans laquelle il est fait en sorte d'amener un deuxième fluide, ladite cavité étant isolée de la cavité de la première vanne en amont de sorties des première et deuxième vannes.

12. Dispositif selon la revendication 11, dans lequel au moins une partie de la surface extérieure du deuxième restricteur définit au moins une partie de la cavité de la deuxième vanne.

13. Dispositif selon l'une quelconque des revendications 8 à 10, comportant un organe (60) de fermeture agencé de façon à boucher les sorties des première et deuxième vannes de telle sorte que, lorsque les vannes laissent s'écouler du fluide, les sorties soient en communication fluidique l'une avec l'autre, du fluide étant ainsi amené, en cours d'utilisation, à quitter une sortie en direction de la sortie de l'autre cavité, et à entrer dans l'autre cavité à travers la sortie de ladite cavité, le fluide présent entre les cavités étant confiné par l'organe de fermeture.

14. Procédé de régulation de fluide à l'aide d'une première vanne (10) et d'une deuxième vanne (12), dans lequel la première vanne est dotée d'une sortie (20) et d'un premier restricteur (24) et la deuxième vanne est dotée d'une sortie et d'un deuxième restricteur, une partie de la première vanne étant agencée dans la deuxième vanne, le procédé comportant les étapes consistant à :
commander l'écoulement descendant d'un premier fluide à travers la sortie (20) de la première vanne en provoquant un mouvement relatif entre le premier restricteur et la sortie de la première vanne, et
commander l'écoulement descendant d'un deuxième fluide différent à travers la sortie de la deuxième vanne en provoquant un mouvement relatif du deuxième restricteur (46) et la sortie de la deuxième vanne, le mouvement relatif du deuxième restricteur étant provoqué en déplaçant une partie de la première vanne qui comprend le deuxième restricteur,
**caractérisé en ce que** :
lorsque chaque vanne est amenée à s'ouvrir, chaque restricteur de la vanne est amené à présenter, dans la région de chaque sortie, une surface extérieure qui est inclinée vers le bas et vers l'intérieur.

15. Procédé selon la revendication 14 comportant une étape consistant à provoquer le mélange des fluides différents lorsque les fluides quittent les restricteurs.
